(19) Europäisches Patentamt

European Patent Office

Office européen des brevets

(11) Veröffentlichungsnummer: **0 375 867 B1**

# (12) EUROPÄISCHE PATENTSCHRIFT

(45) Veröffentlichungstag der Patentschrift: **30.11.94**

(21) Anmeldenummer: **89119448.2**

(22) Anmeldetag: **20.10.89**

(51) Int. Cl.⁵: **C08J 5/12**, //C08L67/02, C08L23/16

(54) Verfahren zur Herstellung eines chemischen Verbundes zwischen Formmassen auf Basis von thermoplastischen Polyestern einerseits und Carboxylgruppen enthaltenden EP(D)M-Kautschuken andererseits sowie die nach diesem Verfahren hergestellten Werkstoffe.

(30) Priorität: **22.12.88 DE 3843225**

(43) Veröffentlichungstag der Anmeldung:
**04.07.90 Patentblatt 90/27**

(45) Bekanntmachung des Hinweises auf die Patenterteilung:
**30.11.94 Patentblatt 94/48**

(84) Benannte Vertragsstaaten:
**AT BE CH DE ES FR GB IT LI NL SE**

(56) Entgegenhaltungen:
**AT-A- 376 691**
**DE-A- 2 923 861**
**FR-A- 2 393 827**
**US-A- 4 029 730**

(73) Patentinhaber: **HÜLS AKTIENGESELLSCHAFT**

**D-45764 Marl (DE)**

(72) Erfinder: **Grosse-Puppendahl, Thomas**
**Stettiner Strasse 10**
**D-4358 Haltern (DE)**
Erfinder: **Schmidt, Friedrich Georg, Dr.**
**Kriegerweg 32**
**D-4400 Münster (DE)**
Erfinder: **Jadamus, Hans, Dr.**
**Hervester Strasse 8**
**D-4370 Marl (DE)**

**Beschreibung**

Die Erfindung betrifft ein Verfahren zur Herstellung eines festen Verbundes zwischen thermoplastischen Formmassen auf Basis von Polyestern einerseits und Carboxylgruppen enthaltenden EP(D)M-Kautschuken andererseits sowie die nach diesem Verfahren erhaltenen Verbundwerkstoffe.

In vielen Fällen kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifigkeit auf einer und Rutschfestigkeit auf der anderen Seite.

Verbundwerkstoffe aus thermoplastischen steifen und gummielastischen Formstoffen werden üblicherweise durch Kleben, Verschrauben, Nieten oder mechanisches Verkrallen zusammengefügt. In neuerer Zeit sind interessante Verfahren zur Herstellung chemischer Verbunde zwischen bestimmten Kautschuken einerseits und Formassen auf Basis von Polyphenylenethern (PPE) andererseits entwickelt worden (vgl. DE-OS 36 02 705 und deutsche Patentanmeldung P 37 39 891.0).

Die erzielten Haftfestigkeitswerte sind beachtlich: Nachdem Verbundwerkstoffe der soeben geschilderten Art grundsätzlich herstellbar sind, möchte man in der Lage sein, auch Verbundwerkstoffe herzustellen, deren thermoplastische Komponente neben einer hohen Wärmeformbeständigkeit gleichzeitig eine gute Lösemittelbeständigkeit, Stabilität bei Bewitterung sowie ein ausgezeichnetes Gleitreibungsverhalten aufweist.

Es sei ferner erwähnt, daß es aus der nicht vorveröffentlichten deutschen Patentanmeldung P 38 18 151.7 bekannt ist, eine Verbund zwischen aliphatischen Polyamiden und Carboxylgruppen enthaltenden Kautschuken herzustellen. Dieses Verbundsystem zeichnet sich durch Beständigkeit gegenüber Lösemitteln und Stabilität bei Bewitterung aus.

Obwohl bekannt ist, daß die aufgeführten Verfahren an bestimmte kritische Parameter geknüpft sind, könnte man grundsätzlich daran denken, den Polyphenylenether durch andere Thermoplasten zu ersetzen, die bekannterweise den genannten Anforderungen besser gerecht werden. Es hat sich jedoch gezeigt, daß sich beispielsweise mit Polyestern, die bekanntlich den oben genannten Anforderungen gerecht werden, unter den als wesentlich erkannten Verfahrensbedingungen keine ausreichenden Haftungswerte erzielen lassen (siehe Vergleichsversuche). Es erschien daher nicht möglich, Verbunde zwischen thermoplastischen Polyestern und Kautschuken herzustellen.

Es wurde jetzt überraschend ein Verfahren gefunden, mit dem dies doch möglich ist. Dieses besteht darin, daß man von einer Kautschukzusammensetzung ausgeht, die - bezogen auf 100 Gewichtsteile eines mit Carboxylgruppen funktionalisierten EP(D)M-Kautschuks -
-    100 bis 300 Gewichtsteile Füllstoffe
-    1 bis 10 Gewichtsteile peroxidische Vulkanisationsmittel
-    0 bis 4 Gewichtsteile Vulkanisationsaktivatoren
-    und gegebenenfalls Verstreckungsmittel
enthält, und daß man einen Thermoplasten
folgender Zusammensetzung einsetzt:
30 bis 100 Gew.-% eines Umsetzungsproduktes aus einem gegebenenfalls schlagzäh modifizierten, thermoplastischen Polyester und einem Polyisocyanat,
0 bis 50 Gew.-% Verstärkungsmittel und
0 bis 20 Gew.-% Zusatzstoffe.

Der Verbund wird durch Covulkanisation der thermoplastischen Formmasse mit der Kautschukzusammensetzung hergestellt.

Der Polyester enthält vorzugsweise überwiegend Hydroxylendgruppen und ist insbesondere Polybutylenterephthalat (PBT), Polyethylenterephthalat (PET) sowie dessen Copolyester mit Isophthalsäure, Dodekandisäure, Polyoxytetramethylen und 1,4-Cyclohexandimethanol. Der Polyester wird insbesondere mit mindestens einer solchen Menge eines Polyisocyanates umgesetzt, daß das Verhältnis der reaktionsfähigen Isocyanatfunktionen zu den Hydroxylendgruppen des Polyesters größer als 1,0, Vorzugsweise größer als 1,1, ist.

Die Covulkanisation des Thermoplasten und des Kautschukes wird vorzugsweise bei Temperaturen zwischen 140 und 200 °C in 2 bis 30 Minuten, insbesondere bei Temperaturen zwischen 150 und 180 °C in 10 bis 20 Minuten, durchgeführt. Gegenstand der Erfindung sind schließlich auch die Covulkanisate gemäß Anspruch 8.

Das erfindungsgemäße Verfahren zeichnet sich durch folgende Vorteile aus:
-   Der Verbund ist vorzugsweise in wenigen Minuten hergestellt.

EP 0 375 867 B1

- Die im Verbundsystem eingesetzen Polyester zeichnen sich durch eine hohe Wärmeformbeständigkeit, gute Lösemittelbeständigkeit und ein ausgezeichnetes Gleitreibungsverhalten aus und sind auch im Außenbereich problemlos einsetzbar.
- Der Verbund ist so stark, daß es im Testfall zu einem Kohäsionsbruch im Gummi, nicht jedoch zu einer Trennung an der Phasengrenzfläche kommt.
- Gegenüber dem in der deutschen Patentanmeldung P 38 18 151.7 beschriebenen Verbundsystem ist das bessere Gleitreibungsverhalten und die geringere Wasseraufnahme zu erwähnen.

Im folgenden sollen die Komponenten des Thermoplasten

a) thermoplastische Polyester

b) Polyisocyanate

c) Verstärkungsmittel

d) Zusatzstoffe

beschrieben werden.

Als thermoplastische Polyester a) eigenen sich lineare, teilkristalline Homo- und Copolyester auf Basis aromatischer Dicarbonsäuren mit 8 bis 14 C-Atomen und (Polyether-)Diolen. Geeignete aromatische Dicarbonsäuren sind z. B. Phthalsäure, Iso- und Terephthalsäure. Bis zu 20 Mol-% der aromatischen Dicarbonsäuren können durch (cyclo)aliphatische Dicarbonsäuren mit bis zu 12 C-Atomen ersetzt sein. Beispielhaft seien Cyclohexan-1,4-dicarbonsäure, Adipinsäure, Sebazinsäure, Azelainsäure und Dekandicarbonsäure erwähnt. Als Diolkomponente eignen sich

- Diole der allgemeinen Formel $HO-(CH_2)_n-OH$, wie z. B. Ethylenglykol, Propandiol-(1,3), Butandiol-(1,4) und Hexandiol-(1,6) und deren C-Methylierungsprodukte wie z. B. Propandiol-(1,2),
- Neopentylglykol,
- 1,4-Cyclohexandimethanol,
- Poly(oxyalkylen)diole mit einem Molgewicht bis 3 000, wie z. B. Poly(oxyethylen)diol und Poly(oxytetramethylen)diol.

Im Falle der Poly(oxyalkylen)diole liegt vorzugsweise ein Blockcopolyester vor; der Poly(oxyalkylen)-diolanteil im Polyester liegt im Bereich von 4 bis 40 Gewichtsprozent, vorzugsweise 10 bis 35 Gewichtsprozent. Als thermoplastische Polyester setzt man vorzugsweise Polybutylenterephthalat (PBT) und Polyethylenterephthalat (PET) sowie deren Copolyester mit Dodecandisäure, Polyoxytetramethylen (HYTREL[R]),1,4-Cyclohexandimethanol oder Isophthalsäure (siehe z. B. EP-OS 0 248 263, Seite 5, Zeile 13 ff.) ein. Die thermoplastischen Polyester werden in bekannter Weise durch Um- oder Veresterung der Dicarbonsäurekomponente und anschließende Polykondensation hergestellt (vgl. "Polymer Chemistry", Interscience Publ. New York, 1961, S. 111-127; Kunststoffhandbuch, Band VIII, C. Hanser Verlag, München, 1973 und J. of Polymer Science, Part A 1,4, Seiten 1851 - 1859 (1966). Die Polyester weisen vorzugsweise Viskositätszahlen J (gemessen gemäß DIN 16 779, Teil 2) von 80 bis 240 $cm^3$/g auf und enthalten überwiegend Hydroxylendgruppen. Sie können schlagzäh modifiziert sein, d. h. bis zu 10 % eines Schlagzähmachers, wie z. B. eines EP(D)M-Kautschukes, enthalten.

Als Polyisocyanate b) eignen sich di- und höherfunktionelle Isocyanate, insbesondere

- aromatische und (cyclo-)aliphatische Isocyanate mit bis 20 C-Atomen wie z. B. Phenylen-1,4-, Toluylen-2,4-, Naphthalin-1,5-diisocyanat, Hexamethylendiisocanat und Isophorondiisocyanat (IPDI),
- blockierte Polyisocyanate und
- Isocyanatoligomere, wie Uretdione und Isocyanurate.

Bevorzugt wird ein trimeres Polyisocyanat auf Basis des cycloaliphatischen Isophorondiisocyanates (IPDI).

Das Umsetzungsprodukt aus dem thermoplastischen Polyester a) und dem Polyisocyanat b) erhält man durch direkte Reaktion beider Komponenten bei 230 bis 300 °C, vorzugsweise 250 bis 270 °C.

Als Verstärkungsmittel c) eignen sich Fasern, insbesondere Glasfasern und Carbonfasern.

Der Thermoplast enthält gegebenenfalls weitere Zusatzstoffe d) wie Verarbeitungshilfsmittel, Treibmittel, Ruß, Graphit und Metallflitter, Zinksulfid, und insbesondere Schlagzähmacher, Stabilisatoren und Farbpigmente wie Titandioxid.

Die im erfindungsgemäßen Verfahren eingesetzte Kautschukzusammensetzung enthält einen Carboxylgruppen enthaltenden EP(D)M-Kautschuk, Füllstoffe, ein peroxidisches Vulkanisationssystem und gegebenenfalls Verstreckungsmittel wie z. B. Weichmacheröle. Vorzugsweise sind bis zu 150 Gewichtsteile Weichmacheröle enthalten.

Die Kautschukkomponente wird in bekannter Weise durch Carboxylierung von EP(D)M-Kautschuk mit ungesättigten Säuren oder Säurederivaten wie z. B. Maleinsäure oder Maleinsäureanhydrid hergestellt (vgl . z. B. US-PS 4 010 223). Es ist auch möglich, diese Kautschuke durch Copolymerisation mit ungesättigten Säuren wie z. B. Acrylsäure herzustellen.

3

EP(D)M-Kautschuke sind Kautschuke, die durch Polymerisation eines Gemisches aus Ethylen und Propylen und gegebenenfalls eines Diens in Gegenwart eines Ziegler-Natta-Katalysators, wie z. B. Diethylaluminiumchlorid, hergestellt werden.

EPDM-Kautschuke werden durch Polymerisation eines Gemisches aus

mehr als 25 % Ethylen,

mehr als 25 % Propylen und

1 bis 10 %, insbesondere 1 bis 3 %, eines nicht konjugierten Diens wie Bicyclo(2.2.1)-heptadien, Hexadien-1.4, Dicyclopentadien und insbesondere 5-Ethylidennorbornen hergestellt.

Geeignete EPM-Kautschuke werden z. B. von der Fa. EXXON unter der Bezeichung EXXELOR VA 1803 (Warenzeichen angemeldet) hergestellt. Ein geeigneter EPDM-Kautschuk ist z. B. MSA-modifiziertes BUNA$^R$ AP (Produktbezeichnung: Versuchsprodukt X 4496) der Bunawerke Hüls GmbH, D-4370 Marl.

Als Füllstoffe eignen sich alle Stoffe, die üblicherweise in EP(D)M-Kautschuken eingesetzt werden, vorzugsweise Ruß, Kieselsäure, Aluminiumsilikate, Calciumcarbonat, Zinkoxid, Stearinsäure sowie deren Mischungen.

Das erfindungsgemäß eingesetzte Vulkanisationssystem besteht aus einem Vulkanisationsmittel und gegebenenfalls einem Vulkanisationsaktivator. Geeignete peroxidische Vulkanisationsmittel sind die dem Fachmann bekannten Peroxide wie z. B. 2,5-Dimethyl-2,5-bis(tert. butylperoxy)hexan, Dicumylperoxid, 4,4-Di-tert.-butylperoxy-n-butylvalerat, 1,1Di-tert. butylperoxy-3,3,5-trimethyl-cyclohexan und Bis(tert. butylperoxyisopropyl)benzol . Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA) und Trimethylolpropantrimethacrylat (TRIM). Bevorzugt werden TAC und/oder EDMA.

Die Fertigung der aus steifen und gummielastischen Formstoffen zusammengesetzten Formteile kann ein- oder zweistufig erfolgen.

Beim zweistufigen Verfahren wird ein Formteil aus dem Thermoplasten, das durch Pressen, Spritzgießen oder Extrudieren hergestellt wurde) mit der ggf. vorgeformten Kautschukmasse beaufschlagt und den Vulkanisationsbedingungen des Kautschuks ausgesetzt. Das Beaufschlagen des steifen Formteils mit dem Kautschuk kann durch Pressen, Spritzgießen oder Extrudieren erfolgen, wobei die Auswahl des Kautschuks bezüglich der Masseviskosität sich nach dem gewählten Formgebungsverfahren richten muß.

Beim zweistufigen Spritzgießverfahren geht man ähnlich wie bei der zweistufigen Herstellung von Zweifarbenspritzteilen vor. Als Einlegeteil verwendet man ein thermoplastisches Formteil. Zylinder und Schnecke der Spritzgießmaschine sind in bekannter Weise für die Kautschukverarbeitung ausgelegt, und das Werkzeug ist auf Vulkanisationstemperatur beheizbar.

Die optimalen Covulkanisationsbedingungen hängen von dem Vulkanisationssystem und der Formteilgestaltung ab.

Geeignete Werkzeugtemperaturen liegen zwischen 140 und 200 ° C, bevorzugt zwischen 150 und 180 ° C. Bei Verwendung von Polyester-Werkstoffen mit niedrigen Formbeständigkeiten in der Wärme wählt man Temperaturen im unteren Teil der angegebenen Bereiche. Die Vulkanisationszeiten liegen zwischen 3 und 30 Minuten, vorzugsweise zwischen 10 und 20 Minuten.

Beim Beaufschlagen und Ausvulkanisieren nach dem zweistufigen Extrusionsverfahren wird z. B. ein in der ersten Stufe hergestelltes Profil aus dem Thermoplasten, z. B. ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Spritzgießverfahren arbeitet man analog zu dem einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisationstemperatur aufgeheizt, die unter der Erstarrungstemperatur des Thermoplasten liegen sollte.

Aus den covulkanisierten Massen lassen sich beispielsweise folgende Gegenstände herstellen: Gummibeschichtete Walzen, Flansche; Rohr- und Schlauchkupplungen, Dichtungsrahmen, stoß- und strahlungsabsorbierende Bauteile, Federelemente; Schwingungsdämpfer` verstärkte Gummiprofile; Transportbänder, Antriebsriemen, Andruckrollen für Video- und Audio-Band-Geräte; Dichtungen; insbesondere Wellendichtringe, Laufrollen, Kupplungs- und Bremsscheiben, Membranen, Kolben mit Dichtringen, verstärkte Faltenbälge, Pumpengehäuse und - klappen oder polyesterverstärkte Gummischläuche.

1. Polyesterhaltige Formmassen

Beispiele 1.1 bis 1.5 und Vergleichsbeispiel A, B und C

Die einzelnen Komponenten werden in einem Doppelschneckenkneter bei 270 °C entsprechend den Mengenangaben der nachfolgenden Übersicht gemischt.

| Zusammensetzung der Beispiele: | | | | | | | | |
|---|---|---|---|---|---|---|---|---|
| | A | B | C | 1.1 | 1.2 | 1.3 | 1.4 | 1.5 |
| VESTODUR$^R$ 1000 [1] | 100 | 99 | - | 98 | 96,5 | 95,2 | 90,9 | - |
| IPDI T 1890 [2] | - | 1 | - | 2 | 3,5 | 4,8 | 9,1 | 8 |
| HYTREL$^R$ 5556 [3] | - | - | 100 | - | - | - | - | 92 |

[1] VESTODUR$^R$

1000 Das niedrigviskose Polybutylenterephthalat erhält man in bekannter Weise durch Polykondensation. Es handelt sich um ein Produkt der HÜLS AKTIENGESELLSCHAFT in D-4370 Marl. Weitere Eigenschaften sind der Produktinformation "VESTODUR" vom März 1985 zu entnehmen.

[2] IPDI T 1890

Es handelt sich um ein mehrfunktionelles, trimeres Isophorondiisocyanat der HÜLS AKTIENGESELLSCHAFT in D-4370 Marl. Die Eigenschaften des Produktes sind der Produktinformation "Polyisocyanat IPDI T 1890" von Juni 1985 zu entnehmen.

[3] HYTREL$^R$ 5556

Es handelt sich um einen Blockcopolyester, der Fa. DU PONT de NEMOURS, Wilmington, Delaware, USA, der unter Verwendung von Poly(oxytetramethylen)diol hergestellt wird. . Die Eigenschaften dieses Produktes sind der Produktinformation "HYTREL - elastischer Konstruktionswerkstoff", Oktober 1986, zu entnehmen.

Eigenschaften der Formteile gemäß den Beispielen 1.1 bis 1.5 sowie der Vergleichsbeispiele A, B und C

| | A | B | C | 1.1 | 1.2 | 1.3 | 1.4 | 1.5 |
|---|---|---|---|---|---|---|---|---|
| MVI[2] $(cm^3/10\ min)$ 2,16 kg/265 °C DIN 53 735 | 80 | 49 | – | 29 | 15 | 52 | 168 | – |
| Vicat-Erweichungstemperatur Methode B (°C) DIN 53 460 | 180 | 180 | – | 178 | 176 | 167 | 159 | – |
| E-Modul $(N/mm^2)$ Zugversuch DIN 53 457 | 2585 | 2720 | 230 | 2860 | 2550 | 2460 | 2420 | 260 |
| Kerbschlagzähigkeit 23 °C $(kJ/m^2)$ DIN 53 453 | 3,1 | 3,0 o. Br.[1] | 3,0 o. Br.[1] | 3,2 | 3,9 | 4,0 | 3,2 o. Br.[1] | 3,2 o. Br.[1] |
| DIN 53 453 –40 °C | 2,9 | 3,0 o. Br.[1] | 3,0 o. Br.[1] | 3,2 | 3,9 | 4,0 | 3,2 o. Br.[1] | 3,2 o. Br.[1] |
| E-Modul $(N/mm^2)$ Biegeversuch DIN 53 457 | 2500 | 2560 | 207 | 2690 | 3100 | 2710 | 2590 | |

1) ohne Bruch
2) Die Einheit MVI (melt volume index) stellt ein Maß für die Fließfähigkeit dar.

2. Kautschuke

2.1 EXXELOR[R] VA 1803

Es handelt sich um einen MSA-modifizierten EPM-Kautschuk der Fa. Deutsche Exxon Chemical GmbH, Köln. Die Eigenschaften des Produktes sind der Technischen Information "EXXELOR VA" vom 01.03.1988, zu entnehmen.

7

2.2 Versuchsprodukt X 4496

Dieses Produkt erhält man durch MSA-Modifizierung von BUNA AP 437 (EPDM). Die Eigenschaften sind der Produktinformation "BUNA[R] AP", Dezember 1980, zu entnehmen.

Zur Demonstration der Verbundwirkung werden Probekörper hergestellt, indem man gemäß DIN 53 531, Teil 1, aus dem thermoplastischen Polymer eine Kunststoffplatte herstellt, diese zu einem Drittel mit einer Teflonfolie abdeckt, auf die Platte ein passendes Kautschukfell legt, den Verbund nach dem Preßverfahren herstellt und schließlich Probekörper mit einer Breite von 25 mm aussägt.

Die Zusammensetzung der Kautschuke ist Tabelle 2 zu entnehmen. Zu Vergleichszwecken wurden auch Versuche mit schwefelvernetzten Kautschuksystemen (Beispiele 3.2 und 3.4) durchgeführt. Die Zusammensetzung der polyesterhaltigen Formmassen ist der Tabelle 1 zu entnehmen. Die Eigenschaften der erfindungsgemäßen Verbundwerkstoffe sind in der Tabelle 3 aufgeführt.

EP 0 375 867 B1

3. Kautschuk-Vulkanisationssysteme

<u>Tabelle 2</u>: Bestandteile der Kautschuk-Zusammensetzungen 3.1 bis 3.4
(Die Zahlen geben Gewichtsteile an)

| Beispiel | 3.1 | 3.2 | 3.3 | 3.4 |
|---|---|---|---|---|
| Kautschuk 2.1 | 100 | 100 | - | - |
| Kautschuk 2.2 | - | - | 100 | 100 |
| Zinkoxid [1] | 5 | 5 | 10 | 5 |
| Aluminiumsilikat [2] | - | - | 140 | 104 |
| Juraperle 10 H [3] | - | - | 60 | 60 |
| Öl [4] | 60 | 60 | 50 | 50 |
| VULKANOX$^R$ HS [5] | 1,5 | 1,5 | 1,5 | 1,5 |
| DUREX$^R$ O [6] | 100 | 100 | - | - |
| TAC [7] | 1 | - | 1 | - |
| Perkadox 14/40 [8] | 7,5 | - | 7,5 | - |
| Stearinsäure | - | 1 | - | 1 |
| VULKANOX$^R$ DDA [9] | - | 1,5 | - | 1,5 |
| VULKACIT$^R$ LDM [10] | - | 1,5 | - | 1,5 |
| VULKACIT$^R$ P extra N [10] | - | 0,8 | - | 0,8 |
| VULKACIT$^R$ Mercapto [10] | - | 1,0 | - | 1,0 |
| TMTD 80 [11] | - | 1,0 | - | 1,0 |
| Schwefel | - | 0,8 | - | 0,8 |

<u>Erläuterungen zu Tabelle 2:</u>

[1] Das eingesetzte Zinkoxid wies einen Reinheitsgrad von mehr als 99 % auf. Die Teilchengröße betrug 0,8 bis 1,0 mm.

[2] Als Aluminiumsilikat wird kombiniertes China-Clay, Typ POLESTAR$^R$ 200 R, der Firma ECC International, St. Austell, Cornwall, Großbritannien eingesetzt. Die Eigenschaften des Produktes sind der Firmenbroschüre zu entnehmen.

[3] Juraperle 10 H ist ein Füllstoff der Fa. Wingersberg Füllstoff und Kreidewerk GmbH, D-5000 Köln-Bayental.

[4] Als paraffinisches Öl kam Sunpar 150, ein Produkt der Fa. Sunoil Belgien LV, Antwerpen, zur Anwendung.

[5] Es wurde VULKANOX$^R$ HS, ein Alterungsschutzmittel der Bayer AG D-5090 Leverkusen, eingesetzt. Es handelt sich um 2,2,4-Trimethyl-1,2-dihydrochinolin.

## Erläuterungen zu Tabelle 2 (Fortsetzung):

6) Es wurde DUREX$^R$ 0, ein halbverstärkender Gasruß der Firma Degussa, D-6450 Hanau, eingesetzt.

7) TAC (Triallylcyanurat) ist ein Produkt der Fa. Degussa, D-6450 Hanau.

8) Perkadox 14/40 ist ein Produkt der Fa. Akzo-Chemie, 3800 AZ-Amersfoort, Niederlande.

9) Es wurde VULKANOX$^R$ DDA, ein Alterungsschutzmittel der Bayer AG, D-5090 Leverkusen, eingesetzt. Es handelt sich um ein styrolisiertes Diphenylamin (SDPA).

10) Als Beschleuniger wurden VULKACIT$^R$ P (Zink-ethyl-phenyl-dithiocarbamat), VULKACIT$^R$, LDB (Zink-dibutyl-dithiocarbamat) und VULKACIT$^R$ Mercapto (Mercapto-benzothiazol) eingesetzt. Es handelt sich um Produkte der Bayer AG, D-5090 Leverkusen.

11) Es wurde TMTD (Tetramethylthiuramdisulfid) mit dem Handelsnamen RHENOGRAM$^R$ TMTD 80 der Fa. Rheinchemie, D-6800 Mannheim, eingesetzt.

4. Verbundwerkstoffe

Tabelle 3

| Eigenschaften der erfindungsgemäßen Verbundwerkstoffe. | | | | | |
|---|---|---|---|---|---|
| Beispiel | Kautschuk | Polyester Werkstoff | Vulkanisationstemperatur in °C | Vulkanisationszeit in Minuten | Trennkraft in N/mm |
| 4.1 | 3.1 | 1.1 | 175 | 15 | 7.5 |
| 4.2 | 3.1 | 1.2 | 175 | 15 | 10.1 |
| 4.3 | 3.1 | 1.3 | 165 | 20 | 10.6 |
| 4.4 | 3.1 | 1.4 | 160 | 25 | 9.2 |
| 4.5 | 3.1 | 1.5 | 160 | 25 | 11.1 |
| 4.6 | 3.3 | 1.3 | 165 | 20 | 14.4 |
| 4.7 | 3.3 | 1.5 | 160 | 25 | 11.7 |

Bei allen Versuchen erfolgt eine Trennung in der Kautschukschicht (Kohäsionsbruch) und nicht in der Grenzfläche Kunststoff/Kautschuk.

Mit schwefelvernetzten Kautschuksystemen wurde keine Verbundhaftung erzielt, d. h. eine Trennung des Verbundes erfolgte ohne großen Kraftaufwand in der Grenzfläche Kunststoff/Kautschuk (s. Vergleichsversuche D und E).

| Beispiel | Kautschuk | Polyester Werkstoff | Vulkanisationstemperatur in °C | Vulkanisationszeit in Minuten | Trennkraft in N/mm |
|---|---|---|---|---|---|
| D | 3.2 | 1.2 | 175 | 15 | 1.2 |
| E | 3.4 | 1.3 | 165 | 20 | 1.0 |

EP 0 375 867 B1

Ferner wurde der thermoplastische Polyester ohne bzw. mit geringem Polyisocyanat-Zusatz mit den Kautschuken 3.1 und 3.3 beaufschlagt. Auch in diesen Fällen lassen sich die Verbundpartner ohne großen Kraftaufwand voneinander trennen.

| Beispiel | Kautschuk | Polyester Werkstoff | Vulkanisationstemperatur in °C | Vulkanisationszeit in Min. | Trennkraft in N/mm |
|---|---|---|---|---|---|
| F | 3.1 | A | 180 | 10 | 2.1 |
| G | 3.1 | B | 180 | 10 | 5.5 |
| H | 3.3 | C | 160 | 25 | 3.2 |

**Patentansprüche**

1.  Verfahren zur Herstellung eines Verbundes zwischen einem Thermoplasten und einem Kautschuk durch Covulkanisation in Gegenwart eines Vulkanisationssystems,
    dadurch gekennzeichnet,
    daß man von einer Kautschukzusammensetzung ausgeht, die - bezogen auf 100 Gewichtsteile eines Carboxylgruppen enthaltenden EP(D)M-Kautschuks -
    -   100 - 300 Gewichtsteile Füllstoffe
    -   1 - 10 Gewichtsteile peroxidische Vulkanisationsmittel
    -   0 - 4 Gewichtsteile Vulkanisationsaktivatoren
    und
    -   gegebenenfalls Verstreckungsmittel
    enthält und man einen Thermoplasten folgender Zusammensetzung einsetzt:
    30 - 100 Gew.-% eines Umsetzungsproduktes aus einem gegebenenfalls schlagzäh modifizierten, thermoplastischen Polyester und einem Polyisocyanat in mindestens einer solchen Menge, daß das Verhältnis der reaktionsfähigen Isocyanatfunktionen zu den Hydroxylendgruppen des Polyesters größer als 1,0 ist,
    0 - 50 Gew.-% Verstärkungsmittel und
    0 - 20 Gew.-% Zusatzstoffe.

2.  Verfahren gemäß Anspruch 1,
    dadurch gekennzeichnet,
    daß man einen Polyester einsetzt, der überwiegend Hydroxylendgruppen enthält.

3.  Verfahren gemäß den Ansprüchen 1 bis 2,
    dadurch gekennzeichnet,
    daß man als Polyester Polybutylenterephthalat, Polyethylenterephthalat oder deren Copolyester mit Isophthalsäure, Dodecandisäure, Polyoxitetramethylen und 1,4-Cyclohexandimethanol einsetzt.

4.  Verfahren gemäß den Ansprüchen 1 bis 3,
    dadurch gekennzeichnet,
    daß der Thermoplast, neben dem Umsetzungsprodukt aus Polyester und Polyisocyanat, Schlagzähmacher, Stabilisatoren und Farbpigmente enthält.

5.  Verfahren gemäß den Ansprüchen 1 bis 4,
    dadurch gekennzeichnet,
    daß als Füllstoffe der Kautschukzusammensetzung Zinkoxid, Calciumcarbonat, Kieselsäure, Stearinsäure, Ruß und/oder Aluminiumsilikate verwendet werden.

6.  Verfahren gemäß den Ansprüchen 1 bis 5,
    dadurch gekennzeichnet,
    daß die Kautschukzusammensetzung bis zu 150 Gewichtsteile Weichermacheröle enthält.

7.  Verfahren gemäß den Ansprüchen 1 bis 6,
    dadurch gekennzeichnet,
    daß man die Covulkanisation bei Temperaturen zwischen 140 und 200 °C in 2 bis 30 Minuten,

11

vorzugsweise bei 150 bis 180 °C in 10 bis 20 Minuten durchführt.

**8.** Covulkanisate, erhalten nach den Ansprüchen 1 bis 7.

**Claims**

**1.** A process for the production of a composite structure between a thermoplastic and a rubber by cowlcanization in the presence of a vulcanization system, characterized in that a rubber composition which comprises - per 100 parts by weight of an EP(D)M rubber containing carboxyl groups -
- 100 - 300 parts by weight of fillers
- 1 - 10 parts by weight of peroxidic vulcanization agents
- 0 - 4 parts by weight of vulcanization activators
and
- if desired extenders
is used as the starting substance and a thermoplastic of the following composition is employed:
30 - 100 % by weight of a reaction product of an optionally impact-modified thermoplastic polyester and a polyisocyanate in at least an amount such that the ratio of reactive isocyanate functions to hydroxyl end groups of the polyester is greater than 1.0,
0 - 50 % by weight of reinforcing agents and
0 - 20 % by weight of additives.

**2.** A process according to claim 1, characterized in that a polyester which contains mainly hydroxyl end groups is employed.

**3.** A process according to either of claims 1 and 2, characterized in that polybutylene terephthalate, polyethylene terephthalate or copolyesters thereof with isophthalic acid, dodecanedioic acid, polyoxytetramethylene and 1,4-cyclohexanedimethanol are employed as the polyester.

**4.** A process according to any of claims 1 to 3, characterized in that, in addition to the reaction product of a polyester and polyisocyanate, the thermoplastic comprises impact tougheners, stabilizers and coloured pigments.

**5.** A process according to any of claims 1 to 4, characterized in that zinc oxide, calcium carbonate, silicic acid, stearic acid, carbon black and/or aluminium silicates are used as fillers for the rubber composition.

**6.** A process according to any of claims 1 to 5, characterized in that the rubber composition comprises up to 150 parts by weight of plasticizer oils.

**7.** A process according to any of claims 1 to 6, characterized in that the covulcanization is carried out at temperatures of from 140 to 200 °C in from 2 to 30 minutes, preferably at from 150 to 180 °C in from 10 to 20 minutes.

**8.** A covulcanizate obtained according to any of claims 1 to 7.

**Revendications**

**1.** Procédé pour la fabrication d'un compound entre un thermoplaste et un caoutchouc, par co-vulcanisation en présence d'un système vulcanisant,
caractérisé en ce que l'on part d'une composition caoutchouteuse qui, relativement à 100 parties en poids d'un caoutchouc EP(D)M renfermant des groupes carboxyle, contient
- de 100 à 300 parties en poids de charges,
- de 1 à 10 parties en poids d'un agent vulcanisant peroxydique
- de 0 à 4 parties en poids d'activants de vulcanisation,
et
- le cas échéant des agents d'étirage, et que l'on utilise
un thermoplaste de la composition suivante :
- 30 à 100 % en poids d'un produit réactionnel obtenu à partir d'un polyester thermoplastique éventuellement modifié pour résister aux chocs et par un poly-isocyanate dans au moins une quantité telle que la proportion des fonctions isocyanates réactives par rapport aux groupes hydroxyle terminaux du polyester soit supérieure à 1,0,
- 0 à 50 % en poids d'agents de renforcement, et
- 0 à 20 % en poids d'additifs.

2. Procédé selon la revendication 1,
caractérisé en ce que l'on utilise un polyester renfermant surtout des groupes hydroxyle terminaux.

3. Procédé selon les revendications 1 et 2,
caractérisé en ce que l'on utilise comme polyester le téréphtalate de polybutylène, le téréphtalate de polyéthylène ou leurs co-polyesters avec l'acide isophtalique, l'acide dodécane-dioïque, le poly-oxy-tétra-méthylène et le 1,4-cyclo-hexane-diméthanol.

4. Procédé selon les revendications 1 à 3,
caractérisé en ce que le thermoplaste renferme, à côté du produit réactionnel obtenu à partir du polyester et du poly-isocyanate, des agents le rendant résistant aux chocs, des stabilisants et des pigments colorants.

5. Procédé selon les revendications 1 à 4,
caractérisé en ce que l'on utilise, comme charges de la composition caoutchouteuse, de l'oxyde de zinc, du carbonate de calcium, de l'acide silicique, de l'acide stéarique, du noir de fumée et/ou des silicates d'aluminium.

6. Procédé selon les revendications 1 à 5,
caractérisé en ce que la composition caoutchouteuse contient jusqu'à 150 parties en poids d'huiles plastifiantes.

7. Procédé selon les revendications 1 à 6,
caractérisé en ce que l'on effectue la co-vulcanisation à des températures comprises entre 140 et 200°C, en 2 à 30 minutes, de préférence à une température de 150 à 180°C en 10 à 20 minutes.

8. Les co-vulcanisats obtenus selon les revendications 1 à 7.